(19) Europäisches Patentamt
European Patent Office
Office européen des brevets

(11) **EP 3 626 954 B1**

(12) **FASCICULE DE BREVET EUROPEEN**

(45) Date de publication et mention de la délivrance du brevet:
**10.11.2021 Bulletin 2021/45**

(51) Int Cl.:
*F02D 35/02* (2006.01)   *G01L 23/22* (2006.01)
*F02D 41/14* (2006.01)

(21) Numéro de dépôt: **19197316.3**

(22) Date de dépôt: **13.09.2019**

(54) **PROCEDE DE DETERMINATION D'UN INDICATEUR DE CLIQUETIS PAR DETERMINATION DE LA PRESSION GLOBALE DANS LE CYLINDRE**

VERFAHREN ZUR BESTIMMUNG EINER KLOPFANZEIGE DURCH BESTIMMUNG DES GESAMTDRUCKS IM ZYLINDER

METHOD FOR DETERMINING AN INDICATOR OF KNOCKING BY DETERMINING THE OVERALL PRESSURE IN THE CYLINDER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2018 FR 1858512**

(43) Date de publication de la demande:
**25.03.2020 Bulletin 2020/13**

(73) Titulaire: **IFP Energies nouvelles**
**92852 Rueil-Malmaison Cedex (FR)**

(72) Inventeurs:
• **KASSA, Mateos**
**92852 RUEIL-MALMAISON CEDEX (FR)**
• **LEROY, Thomas**
**92852 RUEIL-MALMAISON CEDEX (FR)**
• **VIDAL-NAQUET, Fabien**
**92852 RUEIL-MALMAISON CEDEX (FR)**

(56) Documents cités:
CN-A- 108 520 134     JP-A- 2017 214 917
US-A1- 2006 243 030

## Description

La présente invention concerne le domaine de la détermination d'un indicateur du cliquetis pour un moteur à combustion interne, en particulier un moteur à allumage commandé.

Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression puis une étape de combustion sous l'effet d'un allumage commandé, par une bougie, ces étapes étant regroupées sous le vocable de « phase de combustion » dans la suite de la description.

Dans un moteur à explosion, la phase de combustion du mélange air/essence commence normalement après l'étincelle. Le front de flamme se propage et son souffle repousse une partie du mélange contre les parois du cylindre et le sommet du piston. L'élévation de pression et de température est parfois suffisamment importante pour que le mélange non brûlé coincé contre les parois atteigne son point d'auto-allumage et s'auto-enflamme en un ou plusieurs endroits. Ce phénomène est appelé « cliquetis ». Ainsi le cliquetis est avant tout un phénomène de combustion anormale dans les moteurs à allumage commandé, perceptible extérieurement par un bruit métallique venant du moteur qui résulte de l'apparition d'ondes de pression dans la chambre de combustion.

Ces explosions parasites produisent des vibrations dans le domaine audible et au-delà (de l'ordre de 5 à 50 KHz). Elles sont très vives et peuvent rapidement conduire à un échauffement des parois. L'accumulation de cliquetis endommage le métal du piston et/ou des parois du cylindre et les segments. Au bout de quelque temps (selon l'intensité) cela conduit à la destruction du piston, des segments ou des parois du cylindre.

L'estimation du cliquetis permet un contrôle de la combustion limitant l'effet du cliquetis.

## État de la technique

Généralement, la phase de détection du cliquetis comporte une phase d'acquisition de signaux, puis une phase de traitement de ces signaux permettant de détecter l'apparition du cliquetis, de le caractériser et/ou de le quantifier.

Une méthode répandue consiste en une mesure de la pression dans le cylindre, suivie par une détermination d'un indicateur nommé MAPO (de l'anglais « Maximum Amplitude of Pressure Oscillations » pouvant être traduit par amplitude maximum des oscillations de pression).

D'autres indicateurs ont été développés, ces indicateurs sont généralement basés sur une mesure de la pression locale dans le cylindre ou sur la mesure au moyen d'un accéléromètre.

Selon un premier exemple, la demande de brevet JP2017218936 décrit une détermination du cliquetis sur la base du taux de production de chaleur dans le cylindre.

Conformément à un deuxième exemple, les demandes de brevet JP2017207015, JP2017214917, WO17126304 et US2017226956 décrivent la détection du cliquetis par une mesure de la pression dans le cylindre.

En particulier, la demande de brevet JP2017214917 décrit la détection du cliquetis par une mesure de la pression dans le cylindre, et par la considération de différents modes de vibrations, ainsi que par le calcul d'un ratio des amplitudes entre les modes de vibrations. De plus, la demande de brevet WO17126304 divulgue la décomposition du signal par fenêtrage temporel, et détection du cliquetis via une comparaison des pics dans chaque fenêtre.

La demande de brevet US 2006/0243030 décrit une autre méthode de détection du cliquetis.

Les documents listés ci-dessous répertorient et comparent différents indicateurs de cliquetis, différents types de capteurs, et leurs performances :

Dues, S.; Adams, J.; Shinkle, G.; Div, D. Combustion Knock Sensing : Sensor Selection and Application Issues SAE Trans. J. Engines, 1990.

Gao, X.; Stone, R. ; Hudson, C. ; Bradbury, I. The Détection and Quantification of Knock in Spark Ignition Engines SAE Technical Paper, 1993.

Naber, J.; Blough, J.; Frankowski, D.; et al. Analysis of Combustion Knock Metrics in Spark-Ignition Engines SAE Trans. J. Engines, 2006.

Shahlari, A.; Ghandhi, J. A Comparison of Engine Knock Metrics SAE Technical Paper, 2012.

Toutefois, les limites suivantes sont rencontrées par ce type d'indicateurs de cliquetis :

- ces indicateurs de cliquetis sont dépendants de la position du capteur de pression dans la chambre de combustion, car la pression n'est pas homogène dans le cylindre. En effet, la mesure d'un indicateur de cliquetis à des positions différentes génèrent différentes évaluations de l'intensité du cliquetis, ceci est particulièrement vrai pour l'indicateur MAPO, et pour les indicateurs de cliquetis qui sont fondés sur l'amplitude des oscillations de la pression locale mesurée,

- le choix de la technique de traitement du signal influe sur la détection du cliquetis. En effet, deux filtres ayant des gammes de fréquences différentes génèrent différentes évaluations du cliquetis,

- ces indicateurs ne représentent pas le risque d'endommagement du cylindre, en particulier, l'indicateur MAPO est purement qualitatif et non représentatif d'un endommagement du cylindre.

Afin de pallier ces inconvénients, la présente invention concerne un procédé de détermination d'un indicateur de cliquetis de la combustion dans un cylindre d'un moteur à combustion interne. Le procédé est mis en œuvre au moyen d'une mesure de pression locale, dont la décomposition modale permet d'avoir des caractéristiques de la pression globale (représentation de la pression dans toute la chambre de combustion) dans le cylindre. Cette pression permet de déterminer, directement ou indirectement, un indicateur de cliquetis représentatif de l'endommagement du cylindre.

L'invention concerne en outre un procédé de contrôle d'un moteur à combustion interne mettant en œuvre un tel procédé de détermination d'un indicateur de cliquetis.

**Le procédé selon l'invention**

La présente invention concerne un procédé de détermination d'un indicateur de cliquetis de la combustion dans au moins un cylindre d'un moteur à combustion interne, notamment à allumage commandé, ledit cylindre étant pourvu d'un capteur de pression. Pour ce procédé, on met en œuvre les étapes suivantes :

    a) on mesure une pression locale dans ledit cylindre en un point de mesure dudit cylindre au moyen dudit capteur de pression ;
    b) on réalise une décomposition modale dudit signal de mesure de ladite pression locale pour déterminer des modes d'oscillation de ladite pression locale ;
    c) on détermine une pression globale dans ledit cylindre au moyen de ladite décomposition modale dudit signal de mesure de ladite pression locale ; et
    d) on détermine un indicateur de cliquetis, ledit indicateur de cliquetis étant directement ou indirectement fonction de ladite pression globale dans le cylindre.

Selon l'invention, on détermine ladite pression globale, en mettant en œuvre les étapes suivantes :

    i) On définit un modèle de ladite pression globale fonction de l'amplitude des modes de ladite pression globale ;
    ii) on calcule le modèle de pression globale aux coordonnées du capteur $(x_0, y_0, z_0)$;
    iii) on détermine ladite amplitude desdits modes de ladite pression globale, par identification des oscillations de chaque mode de ladite décomposition modale de ladite pression locale au point de mesure de ladite pression locale.

Conformément à une mise en œuvre, procédé comporte une étape supplémentaire de détermination de la vitesse des gaz dans ledit cylindre, au moins à proximité des parois dudit cylindre, en appliquant un modèle acoustique de la conservation de mouvement de gaz dans ledit cylindre à ladite pression globale dans ledit cylindre, et on détermine ledit indicateur de cliquetis en fonction de ladite vitesse des gaz dans ledit cylindre.

Selon une caractéristique, le procédé comporte en outre les étapes suivantes :

    i) on détermine une vitesse des gaz dans ledit cylindre, au moins à proximité des parois dudit cylindre, en appliquant un modèle acoustique de la conservation de mouvement de gaz dans ledit cylindre à ladite pression globale dans ledit cylindre
    ii) on détermine un coefficient de transfert thermique auxdites parois dudit cylindre en appliquant un modèle de coefficient de transfert thermique à l'aide de ladite pression locale mesurée et de ladite vitesse des gaz dans ledit cylindre ; et
    iii) on détermine un indicateur de cliquetis au moyen dudit coefficient de transfert thermique convectif aux parois dudit cylindre.

Avantageusement, ledit modèle de coefficient de transfert thermique s'écrit : $h = C \times P^{\alpha} \times u^{\beta} \times D^{\gamma} \times T^{\delta}$ avec h le coefficient de transfert thermique, C une constante, D une longueur caractéristique de l'écoulement dudit cylindre, P la pression dans ledit cylindre, u ladite vitesse des gaz à proximité des parois du cylindre, T la température des gaz dans le cylindre, $\alpha, \beta, \gamma, et\ \delta$ des coefficients constants prédéterminés.

De préférence, ladite température T est déterminée par une application de la loi des gaz parfaits dans ledit cylindre (12)

Selon un aspect, on détermine ledit indicateur de cliquetis au moyen d'une étape de détermination du transfert thermique Q, de telle sorte que $Q = h \times (T1 - T2)$ avec h le coefficient de transfert thermique, et T1 - T2 le gradient de température entre les gaz dans le cylindre et la paroi du cylindre.

De manière avantageuse, ledit modèle acoustique de la conservation du mouvement de gaz dans ledit cylindre s'écrit :

$$\rho_0 \frac{\delta u_1}{\delta t} + \nabla P_1 = 0$$

avec $\rho_0$ la densité des gaz, u1 la vitesse des gaz associée à l'onde acoustique et P1 la pression dans ledit cylindre associée à l'onde acoustique.

Selon une mise en œuvre, on détermine ladite vitesse des gaz dans ledit cylindre en prenant en compte la vitesse nominale des gaz dans ledit cylindre.

Conformément à un mode de réalisation, ladite vitesse nominale des gaz dans ledit cylindre est estimée au moyen de caractéristiques de l'admission des gaz au sein dudit cylindre, notamment les caractéristiques de l'admission générant des tourbillons dudit gaz dans ledit cylindre.

Selon un aspect, ledit procédé comporte une étape supplémentaire de détermination d'une combustion anormale par analyse dudit indicateur de cliquetis.

En outre, l'invention concerne un procédé de contrôle de la combustion d'un moteur à combustion interne, notamment à allumage commandé, dans lequel on détecte un cliquetis de la combustion dans au moins un cylindre dudit moteur à combustion interne. Pour ce procédé, on met en œuvre les étapes suivantes :

a) on détermine un indicateur de cliquetis au moyen du procédé selon l'une des caractéristiques précédentes ; et
b) on contrôle la combustion dudit moteur à combustion interne en fonction dudit indicateur de cliquetis.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un moteur à combustion interne adapté à la mise en œuvre du procédé selon l'invention.
La figure 2 illustre les étapes du procédé selon un premier mode de réalisation de l'invention.
La figure 3 illustre les étapes du procédé selon un deuxième mode de réalisation de l'invention.
La figure 4 illustre les étapes du procédé selon un troisième mode de réalisation de l'invention.

**Description détaillée de l'invention**

La présente invention concerne un procédé de détermination d'un indicateur de cliquetis de la combustion dans un cylindre d'un moteur à combustion interne. La présente invention est particulièrement adaptée pour un moteur à allumage commandé (moteur essence).

Le moteur à combustion interne peut être de tout type : il peut notamment être suralimenté ou non, à injection de carburant directe ou indirecte, et équipé d'un système de recirculation des gaz d'échappement ou non, etc.

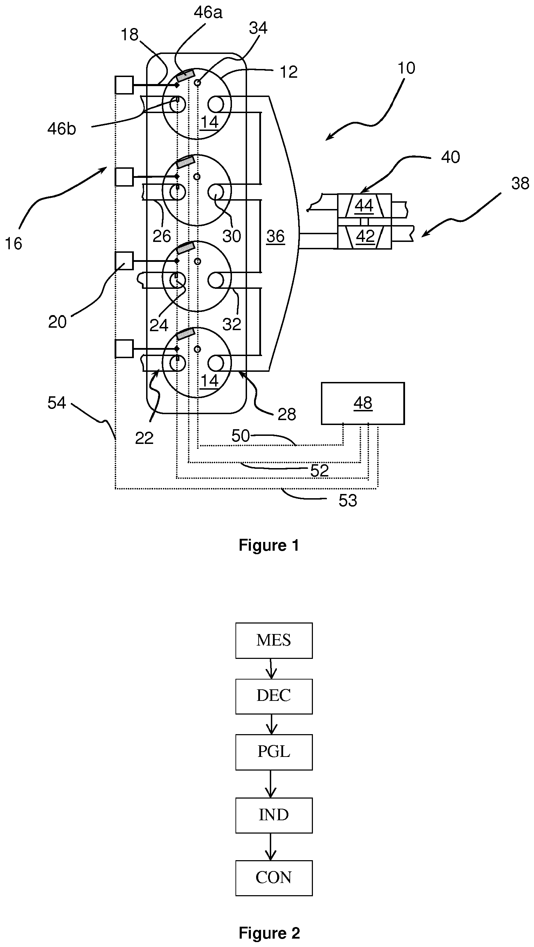

La figure 1 illustre, schématiquement et de manière non limitative, un moteur à combustion interne 10 adapté à la mise en œuvre du procédé selon l'invention. Le moteur à combustion interne 10 illustré est de type suralimenté à allumage commandé, en particulier de type essence, comprend au moins un cylindre 12 (quatre cylindres 12 pour le mode de réalisation de la figure 1) avec une chambre de combustion 14 à l'intérieur de laquelle se produit la combustion d'un mélange d'air suralimenté et de carburant (caractéristiques optionnelles pour la mise en œuvre du procédé selon l'invention).

Le cylindre 12 comprend au moins un moyen d'alimentation en carburant sous pression 16, par exemple sous la forme d'un injecteur de carburant 18 contrôlé par une vanne 20, qui débouche dans la chambre de combustion, au moins un moyen d'admission d'air 22 avec une soupape d'admission 24 associée à une tubulure d'admission 26 se terminant par un plénum 26b (non représenté sur la figure), au moins un moyen d'échappement des gaz brûlés 28 avec une soupape d'échappement 30 et une tubulure d'échappement 32 et au moins un moyen d'allumage 34, comme une bougie, qui permet de générer une ou plusieurs étincelles permettant d'enflammer le mélange carburé présent dans la chambre de combustion.

Les tubulures 32 des moyens d'échappement 28 de ce moteur sont raccordées à un collecteur d'échappement 36 lui-même connecté à une ligne d'échappement 38. Un dispositif de suralimentation 40, par exemple un turbocompresseur ou un compresseur volumétrique, est placé sur cette ligne d'échappement et comprend un étage d'entraînement 42 avec une turbine balayée par les gaz d'échappement circulant dans la ligne d'échappement et un étage de compression 44 qui permet de faire admettre un air d'admission sous pression dans les chambres de combustion 14 par les tubulures d'admission 26.

Le moteur comprend des moyens 46a de mesure de la pression locale dans le cylindre, disposés au sein même du cylindre 12 du moteur. Ces moyens de mesure comprennent généralement un capteur de pression qui permet de générer un signal représentatif de l'évolution de la pression locale dans un cylindre ou un accéléromètre permettant d'obtenir une représentation indirecte des oscillations de pression dans la chambre de combustion.

Le moteur peut également comporter des moyens 46b de mesure de la pression d'admission (caractéristique optionnelle pour le procédé selon l'invention), disposés dans le plénum 26b. Ces moyens de mesure sont généralement constitués par un capteur de pression absolue, de type piézoélectrique, qui permet de générer un signal représentatif de l'évolution de la pression d'admission dans le plénum d'admission.

Le moteur comprend également une unité de calcul et de commande 48, dénommée calculateur moteur, qui est reliée par des conducteurs (pour certains bidirectionnels) aux différents organes et capteurs du moteur de façon à pouvoir recevoir les différents signaux émis par ces capteurs, et ensuite commander les organes de ce moteur pour assurer son bon fonctionnement.

Ainsi, dans le cas de l'exemple montré à la figure 1, les bougies 34 sont reliées par des conducteurs 50 au calculateur moteur 48 de façon à commander le moment de l'allumage du mélange carburé, le capteur de pression cylindre 46a est connecté par une ligne 52 à ce même calculateur moteur pour lui envoyer les signaux représentatifs de l'évolution de la pression dans le cylindre, et les vannes 20 de commande des injecteurs 18, sont raccordées par des conducteurs 54 au calculateur 48 pour commander l'injection de carburant dans les chambres de combustion. Les moyens 46b sont également connectés par une ligne 53 au calculateur moteur 48.

Pour la mise en œuvre du procédé selon l'invention, au moins un cylindre du moteur à combustion interne comporte un capteur de pression, mesurant une pression locale dans le cylindre. Il s'agit de la pression des gaz dans le cylindre. Les gaz forment un comburant ou un mélange carburé (cas de l'injection indirecte), et peuvent comprendre notamment de l'air à pression ambiante, de l'air suralimenté, un mélange d'air (suralimenté ou non) et des gaz brûlés.

Selon un premier mode de réalisation l'invention et tel qu'illustré en figure 2, le procédé de détermination d'un indicateur de cliquetis peut comporter les étapes suivantes :

   1) mesure de la pression locale dans le cylindre (MES)
   2) décomposition modale du signal de mesure de la pression locale (DEC)
   3) détermination de la pression globale dans le cylindre (PGL)
   6) détermination de l'indicateur de cliquetis (IND)
   7) contrôle de la combustion (CON)

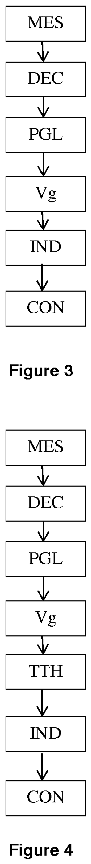

Selon un deuxième mode de réalisation de l'invention et tel qu'illustré en figure 3, le procédé de détermination d'un indicateur de cliquetis peut comporter les étapes suivantes :

   1) mesure de la pression locale dans le cylindre (MES)
   2) décomposition modale du signal de mesure de la pression locale (DEC)
   3) détermination de la pression globale dans le cylindre (PGL)
   4) détermination de la vitesse des gaz dans le cylindre (Vg)
   6) détermination de l'indicateur de cliquetis (IND)
   7) contrôle de la combustion (CON)

Selon un troisième mode de réalisation de l'invention et tel qu'illustré en figure 4, le procédé de détermination d'un indicateur de cliquetis peut comporter les étapes suivantes :

   1) mesure de la pression locale dans le cylindre (MES)
   2) décomposition modale du signal de mesure de la pression locale (DEC)
   3) détermination de la pression globale dans le cylindre (PGL)
   4) détermination de la vitesse des gaz dans le cylindre (Vg)
   5) détermination du transfert thermique (TTH)
   6) détermination de l'indicateur de cliquetis (IND)
   7) contrôle de la combustion (CON)

Les étapes 1) à 3) sont communes pour les trois modes de réalisation de l'invention. Les étapes 2) à 6) peuvent être mises en œuvre par le calculateur du moteur ; ainsi la détermination de l'indicateur du cliquetis est réalisée en ligne.

L'étape facultative 7) représente une variante de réalisation de l'invention.

Toutes les étapes du procédé sont réalisées, de préférence, en temps réel (c'est-à-dire de cycle à cycle), de manière à déterminer l'indicateur de cliquetis en temps réel, afin de pouvoir éventuellement agir sur le cliquetis avant le prochain allumage.

Dans la suite de la demande, on appelle « pression locale » la pression au point de mesure du capteur de pression, et on appelle « pression globale » une représentation de la pression dans toute la chambre de combustion du cylindre.

Les sept étapes du procédé sont détaillées dans la suite de la description.

1) Mesure de la pression locale dans le cylindre

Il s'agit d'une étape de mesure de la pression locale dans la chambre de combustion du cylindre au moyen du capteur de pression équipant le cylindre. Le capteur de pression génère un signal de capteur représentatif de la pression locale en un point dans le cylindre.

2) Décomposition modale du signal de mesure de la pression locale

Cette étape concerne la décomposition du signal de mesure de la pression locale, afin de déterminer les modes d'oscillation de pression dans la chambre de combustion.

Selon un mode de réalisation de l'invention, cette décomposition modale du signal de mesure peut être mise en œuvre par un filtrage du signal de mesure de la pression locale autour des fréquences d'intérêt correspondant aux modes d'oscillation.

Les fréquences d'intérêt peuvent être obtenues par la résolution de l'équation d'onde acoustique pour la géométrie spécifique du cylindre. Selon un exemple de réalisation, l'équation d'onde acoustique peut s'écrire :

$$\Delta P = \frac{1}{c^2} \times \frac{\delta^2 P}{\delta t^2}$$ avec P la pression, c la vitesse du son. Cette équation aux dérivées partielles peut être résolue par des solutions de Bessel, qui contiennent les fréquences recherchées, ainsi que la forme d'onde dans la chambre.

Selon un mode de réalisation de l'invention, la vitesse du son peut être calculée par une formule du type : $c = \sqrt{\gamma r T}$ avec $\gamma$ le coefficient adiabatique, r la constante thermodynamique spécifique des gaz et T la température.

### 3) Détermination de la pression globale dans le cylindre

Lors de cette étape, on détermine des caractéristiques de la pression globale dans le cylindre au moyen de la décomposition modale de la pression locale dans le cylindre.

Une fois que les oscillations (les modes) de la pression locale sont décomposées mode par mode, la mesure de pression locale est associée avec l'oscillation de pression globale (mode par mode) de toute la chambre de combustion du cylindre. Pour cela, la somme des oscillations (modes) de chaque mode de la pression locale permet de reconstruire les oscillations (modes) de la pression globale, par exemple au moyen des solutions de Bessel. Ainsi, la mesure de pression locale est exploitée pour retrouver la description complète de la pression à l'intérieur de la chambre de combustion.

Cette détermination de la pression globale est permise car les oscillations de pression dans la chambre de combustion peuvent être complètement décrites au moyen d'une décomposition modale.

Ainsi, grâce à seulement un capteur de pression locale, il est possible de remonter à la pression globale dans le cylindre.

Selon un mode de réalisation de l'invention, on peut mettre en œuvre les étapes suivantes pour réaliser la détermination de la pression globale ;

a) au moyen de la résolution de l'équation d'onde à l'étape 1), on construit un modèle de la pression globale P par une équation du type : $P(x,y,z,t) = \Sigma_i(A_i(t) \times f_i(x,y,z) \times g_i(t))$ avec A l'amplitude qui dépend du cycle analysé, les fonctions f et g définies pour chaque mode i (ce sont les solutions de l'équation d'onde de l'étape 2), t le temps et x, y, z les coordonnées d'un point dans la chambre de combustion,

b) on calcule le modèle de pression globale aux coordonnées du capteur (x0,y0,z0), pour identifier les fonctions $A_i(t)$ par corrélation avec la mesure. Cette identification est possible grâce à la décomposition modale permettant de corréler modèle et mesure mode par mode. Cette identification permet de complètement définir le modèle de pression globale.

Pour le premier mode de réalisation (figure 2), le procédé continue directement avec l'étape 6). Pour les deuxième et troisième modes de réalisations (respectivement figures 3 et 4)), le procédé continue avec l'étape 4.

### 4) Détermination de la vitesse des gaz dans le cylindre

Lors de cette étape, on détermine la vitesse des gaz dans au moins une portion du cylindre, notamment au moins à proximité des parois latérales du cylindre et/ou du piston et/ou de la culasse. Alternativement, on peut déterminer la vitesse des gaz dans la totalité du cylindre. Cette étape est mise en œuvre au moyen d'un modèle acoustique de la conservation de quantité de mouvement des gaz. Le modèle acoustique est appliqué à la pression globale dans le cylindre déterminée à l'étape précédente. Ainsi, il est possible de déterminer de manière représentative le comportement physique des gaz dans le cylindre.

Selon un mode de réalisation de l'invention, le modèle acoustique de la conservation de mouvement de gaz dans le cylindre peut s'écrire par une équation de la forme $\rho_0 \frac{\delta u_1}{\delta t} + \nabla P_1 = 0$ avec $\rho_0$ la densité des gaz, u1 la vitesse des gaz associée à l'onde acoustique et P1 la pression dans le cylindre associée à l'onde acoustique. Cette équation acoustique de la conservation de mouvement de gaz permet de calculer la vitesse des gaz d'après le gradient de pression dans la chambre de combustion. Une décomposition de la pression globale en termes spatial et temporel permet d'exploiter l'équation acoustique. Grâce à la décomposition modale de la pression globale (calculée dans les étapes 2 et 3), la contribution des ondes acoustiques à la vitesse des gaz dans la chambre de combustion du cylindre peut être directement calculée.

Conformément à une mise en œuvre de l'invention, la combinaison de la vitesse nominale avec les oscillations de vitesse calculées par le modèle acoustique peut permettre de reconstruire la vitesse totale des gaz dans la chambre. La vitesse nominale peut résulter des caractéristiques de l'admission des gaz dans le cylindre. Ces caractéristiques peuvent être des caractéristiques de l'admission permettant le swirl, le tumble ou le swumble (combinaison de swirl et de tumble).

Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que de hauteur de levée maximale.

L'utilisation du swumble permet de bénéficier des avantages des deux structures aérodynamiques détaillées ci-dessus et donc de bénéficier d'une excellente homogénéisation et d'une meilleure vitesse de combustion grâce à un niveau de turbulence plus élevée lors de la phase de compression que ce qu'on observe avec les meilleurs moteurs à allumage commandé actuels.

Pour le deuxième mode de réalisation (figure 3), le procédé continue avec l'étape 6). Pour le troisième mode de réalisation (figure 4), le procédé continue avec l'étape 5).

5) Détermination du transfert thermique aux parois du cylindre

Lors de cette étape, on détermine le transfert thermique convectif aux parois latérales du cylindre et/ou du piston et/ou de la culasse, en appliquant un modèle de transfert thermique à la pression locale et à la vitesse des gaz dans la chambre de combustion déterminée lors de l'étape 4). Ainsi, en sortie de cette étape, on obtient un coefficient de transfert thermique aux parois du cylindre, représentatif des phénomènes physiques mis en œuvre dans le cylindre, qui peuvent générer un endommagement du cylindre.

Selon un aspect de l'invention, le modèle de transfert thermique peut dépendre de la pression locale, de la température des gaz dans le cylindre, et de la vitesse des gaz à proximité des parois du cylindre.

Selon une mise en œuvre de réalisation de l'invention, le modèle de transfert thermique peut s'écrire : $h = C \times P^\alpha \times u^\beta \times D^\gamma \times T^\delta$ avec h le coefficient de transfert thermique, C une constante, D une longueur caractéristique de l'écoulement dudit cylindre, P la pression dans le cylindre déterminée à l'étape 3), u la vitesse des gaz à proximité des parois du cylindre déterminée à l'étape 4), T la température des gaz dans le cylindre, $\alpha, \beta, \gamma, et \delta$ des coefficients constants prédéterminés. Par exemple, les coefficients utilisés peuvent être $\alpha = 0.8$, $\beta = 0.8$, $\gamma = -0.2$ et $\delta = -0.53$ avec D l'alésage cylindre (tels qu'utilisés dans le modèle de Woschni).

Conformément à une mise en œuvre de ce mode de réalisation de l'invention, la température n'est pas mesurée, mais peut être déterminée par une application de la loi des gaz parfaits dans la chambre de combustion du cylindre. La loi des gaz parfaits peut s'écrire : $PV = mrT$ avec P la pression locale mesuré, V le volume du cylindre (connu), m la masse des gaz dans la chambre de combustion, r la constante thermodynamique spécifique des gaz et T la température. Cette mise en œuvre permet de se passer d'un capteur de température dans le cylindre.

Pour cette mise en œuvre, la masse de gaz peut être estimée par d'autres capteurs externes au cylindre.

Alternativement, la température peut être mesurée au moyen d'un capteur de température.

6) Détermination d'un indicateur de cliquetis

Lors de cette étape, on déduit un indicateur de cliquetis de la grandeur mesurée à l'étape précédente (pression globale pour le premier mode de réalisation, vitesse des gaz pour le deuxième mode de réalisation, et coefficient de transfert thermique pour le troisième mode de réalisation). De cette manière, l'indicateur de cliquetis dépend directement (cas du premier mode de réalisation) ou indirectement (cas des deuxième et troisième modes de réalisation) de la pression globale du cylindre. Ainsi, l'indicateur de cliquetis est indépendant de la position du capteur de pression, et est indépendant d'un quelconque filtrage du signal.

Pour le premier mode de réalisation, l'indicateur de cliquetis dépend directement de la pression globale du cylindre. Dans ce cas, l'indicateur de cliquetis peut notamment être une valeur maximale de l'amplitude d'oscillation de la pression globale, la valeur maximale (ou moyenne) du gradient de la pression, etc. Ces méthodes permettent de mieux qualifier la sévérité du cliquetis en utilisant la globalité des conditions dans toute la chambre.

Pour le deuxième mode de réalisation, l'indicateur de cliquetis dépend de la vitesse des gaz qui est fonction de la pression globale du cylindre. Dans ce cas, l'indicateur de cliquetis peut notamment être la valeur maximale de la vitesse des gaz dans le cylindre, etc. La vitesse des gaz informe de l'interaction des gaz brulés avec les parois et, permet ainsi de qualifier la susceptibilité d'endommagement du moteur.

Pour le troisième mode de réalisation, l'indicateur de cliquetis est dépendant du coefficient du transfert thermique qui est fonction de la vitesse des gaz, elle-même fonction de la pression globale du cylindre. Dans ce cas, l'indicateur de cliquetis peut être la valeur maximale au cours du temps de la moyenne spatiale (dans le volume du cylindre) du coefficient de transfert thermique h sur les parois.

Toutefois, l'indicateur de cliquetis peut prendre différentes formes dépendantes de la valeur du coefficient de transfert thermique h sur les parois, par exemple sa moyenne, sa médiane, etc. On peut aussi réaliser un calcul du transfert thermique aux parois. Dans ce cas, on peut déterminer ledit indicateur de cliquetis au moyen d'une étape de détermination du transfert thermique Q, de telle sorte que $Q = h \times (T1 - T2)$ avec h le coefficient de transfert thermique, et T1 - T2 le gradient de température.

Ainsi, l'indicateur de cliquetis est corrélé aux risques d'endommagement du cylindre. En effet, ce transfert thermique traduit la sévérité de la combustion au niveau des parois du cylindre, qui sont les éléments qui s'endommagent lors du cliquetis.

7) Contrôle de la combustion

On rappelle que cette étape est facultative. Il s'agit de contrôler la phase de combustion au sein du cylindre du moteur à combustion interne, en fonction de l'indicateur de cliquetis déterminé à l'étape précédente, afin de réduire l'apparition du cliquetis et donc les risques d'endommagement du cylindre. Le contrôle de la combustion peut être mis en œuvre par le contrôleur du moteur.

En cas de cliquetis détecté au moyen du procédé selon l'invention, le calculateur peut lancer les actions nécessaires au contrôle des combustions suivantes afin d'éviter la poursuite de l'occurrence du cliquetis lors des combustions suivantes.

Selon un mode de réalisation, le contrôle peut être fondé sur une comparaison de l'indicateur de cliquetis avec un seuil de cliquetis.

Avantageusement, on peut contrôler la phase de combustion par un contrôle de la variation de l'avance à l'allumage en fonction de l'indicateur de cliquetis.

La présente invention n'est pas limitée aux exemples de réalisation décrits ci-dessus mais est définie par les revendications.

## Revendications

1. Procédé de détermination d'un indicateur de cliquetis de la combustion dans au moins un cylindre (12) d'un moteur à combustion interne (10), notamment à allumage commandé, ledit cylindre (12) étant pourvu d'un capteur de pression (46a), **caractérisé en ce qu'**on met en œuvre les étapes suivantes :

   a) on mesure une pression locale dans ledit cylindre (12) en un point de mesure dudit cylindre au moyen dudit capteur de pression (46a) ;
   b) on réalise une décomposition modale dudit signal de mesure de ladite pression locale pour déterminer des modes d'oscillation de ladite pression locale ;
   c) on détermine une pression globale dans ledit cylindre (12) au moyen de ladite décomposition modale dudit signal de mesure de ladite pression locale, en mettant en œuvre les étapes suivantes :

      i) On définit un modèle de ladite pression globale fonction de l'amplitude des modes de ladite pression globale ;
      ii) On calcule le modèle de pression globale aux coordonnées (x0, y0, z0) dudit point de mesure dudit capteur de pression (46a) ;
      iii) on détermine ladite amplitude desdits modes de ladite pression globale, par identification des oscillations de chaque mode de ladite décomposition modale de ladite pression locale au point de mesure de ladite pression locale ; et

   d) on détermine un indicateur de cliquetis, ledit indicateur de cliquetis étant directement ou indirectement fonction de ladite pression globale dans le cylindre (12).

2. Procédé selon l'une des revendications précédentes, dans lequel le procédé comporte une étape supplémentaire de détermination de la vitesse des gaz dans ledit cylindre (12), au moins à proximité des parois dudit cylindre (12), en appliquant un modèle acoustique de la conservation de mouvement de gaz dans ledit cylindre (12) à ladite pression globale dans ledit cylindre (12), et dans lequel on détermine ledit indicateur de cliquetis en fonction de ladite vitesse des gaz dans ledit cylindre (12).

3. Procédé selon la revendication 1, dans lequel le procédé comporte en outre les étapes suivantes :

   i) on détermine une vitesse des gaz dans ledit cylindre (12), au moins à proximité des parois dudit cylindre (12), en appliquant un modèle acoustique de la conservation de mouvement de gaz dans ledit cylindre (12) à ladite pression globale dans ledit cylindre (12) ;
   ii) on détermine un coefficient de transfert thermique auxdites parois dudit cylindre (12) en appliquant un modèle de coefficient de transfert thermique à l'aide de ladite pression locale mesurée et de ladite vitesse des gaz dans ledit cylindre (12) ; et
   iii) on détermine un indicateur de cliquetis au moyen dudit coefficient de transfert thermique convectif aux parois dudit cylindre (12).

4. Procédé selon la revendication 3, dans lequel ledit modèle de coefficient de transfert thermique s'écrit : $h = C \times P^{\alpha} \times u^{\beta} \times D^{\gamma} \times T^{\delta}$ avec h le coefficient de transfert thermique, C une constante, D une longueur caractéristique de l'écoulement dudit cylindre, P la pression dans ledit cylindre, u ladite vitesse des gaz à proximité des parois du cylindre, T la température des gaz dans le cylindre, $a, \beta, \gamma, et \delta$ des coefficients constants prédéterminés.

5. Procédé selon la revendication 4, dans lequel ladite température T est déterminée par une application de la loi des gaz parfaits dans ledit cylindre (12)

6. Procédé selon l'une des revendications 3 à 5, dans lequel on détermine ledit indicateur de cliquetis au moyen d'une étape de détermination du transfert thermique Q, de telle sorte que $Q = h \times (T1 - T2)$ avec h le coefficient de transfert thermique, et T1 - T2 le gradient de température entre les gaz dans le cylindre (12) et la paroi du cylindre (12).

7. Procédé selon l'une des revendications 2 à 6, dans lequel ledit modèle acoustique de la conservation du mouvement de gaz dans ledit cylindre s'écrit :

$$\rho_0 \frac{\delta u_1}{\delta t} + \nabla P_1 = 0$$ avec $\rho_0$ la densité du gaz, u1 la vitesse du gaz associée à l'onde acoustique et P1 la pression dans ledit cylindre associée à l'onde acoustique.

8. Procédé selon l'une des revendications 2 à 7, dans lequel on détermine ladite vitesse des gaz dans ledit cylindre (12) en prenant en compte la vitesse nominale des gaz dans ledit cylindre (12).

9. Procédé selon la revendication 8, dans lequel ladite vitesse nominale des gaz dans ledit cylindre (12) est estimée au moyen de caractéristiques de l'admission des gaz au sein dudit cylindre (12), notamment les caractéristiques de l'admission générant des tourbillons dudit gaz dans ledit cylindre (12).

10. Procédé selon l'une des revendications précédentes, dans lequel ledit procédé comporte une étape supplémentaire de détermination d'une combustion anormale par analyse dudit indicateur de cliquetis.

11. Procédé de contrôle de la combustion d'un moteur à combustion interne (10), notamment à allumage commandé, dans lequel on détecte un cliquetis de la combustion dans au moins un cylindre (12) dudit moteur à combustion interne (10), **caractérisé en ce qu'**on met en œuvre les étapes suivantes :

    a) on détermine un indicateur de cliquetis au moyen du procédé selon l'une des revendications précédentes ; et
    b) on contrôle la combustion dudit moteur à combustion interne (10) en fonction dudit indicateur de cliquetis.

**Patentansprüche**

1. Verfahren zur Bestimmung einer Klopfanzeige der Verbrennung in mindestens einem Zylinder (12) eines Verbrennungsmotors (10), insbesondere mit Fremdzündung, wobei der Zylinder (12) über einen Drucksensor (46a) verfügt, **dadurch gekennzeichnet, dass** die folgenden Schritte umgesetzt werden:

    a) Messen eines lokalen Drucks in dem Zylinder (12) an einem Messpunkt des Zylinders mit Hilfe des Drucksensors (46a);
    b) Durchführen einer modalen Zerlegung des Messsignals des lokalen Drucks, um Schwingungsmoden des lokalen Drucks zu bestimmen;
    c) Bestimmen eines Gesamtdrucks in dem Zylinder (12) mit Hilfe der modalen Zerlegung des Messsignals des lokalen Drucks, indem die folgenden Schritte umgesetzt werden:

    i)Definieren eines Modells des Gesamtdrucks, das von der Amplitude der Moden des Gesamtdrucks abhängt;
    ii)Berechnen des Gesamtdruckmodells an den Koordinaten (x0, y0, z0) des Messpunkts des Drucksensors (46a) ;
    iii)Bestimmen der Amplitude der Moden des Gesamtdrucks durch Identifikation der Schwingungen jeder Mode der modalen Zerlegung des lokalen Drucks am Messpunkt des lokalen Drucks; und

    d) Bestimmen einer Klopfanzeige, wobei die Klopfanzeige direkt oder indirekt von dem Gesamtdruck in dem Zylinder (12) abhängt.

2. Verfahren nach einem der vorhergehenden Ansprüche, wobei das Verfahren einen zusätzlichen Schritt des Bestimmens der Geschwindigkeit der Gase in dem Zylinder (12) mindestens in der Nähe der Wände des Zylinders (12) umfasst, indem ein akustisches Modell der Erhaltung der Bewegung von Gasen in dem Zylinder (12) auf den Gesamtdruck in dem Zylinder (12) angewendet wird, und wobei die Klopfanzeige in Abhängigkeit von der Geschwindigkeit der Gase in dem Zylinder (12) bestimmt wird.

3. Verfahren nach Anspruch 1, wobei das Verfahren ferner die folgenden Schritte umfasst:

    i)Bestimmen einer Geschwindigkeit der Gase in dem Zylinder (12) mindestens in der Nähe der Wände des Zylinders (12), indem ein akustisches Modell der Erhaltung der Bewegung von Gasen in dem Zylinder (12) auf den Gesamtdruck in dem Zylinder (12) angewendet wird;
    ii)Bestimen eines Wärmeübertragungskoeffizienten an den Wänden des Zylinders (12), indem mit Hilfe des gemessenen lokalen Drucks und der Geschwindigkeit der Gase in dem Zylinder (12) ein Wärmeübertragungskoeffizientenmodell angewendet wird; und
    iii)Bestimen einer Klopfanzeige mit Hilfe des konvektiven Wärmeübertragungskoeffizienten an den Wänden des Zylinders (12).

4. Verfahren nach Anspruch 3, wobei das Wärmeübertragungskoeffizientenmodell folgendermaßen ausgedrückt wird: $h = C \times P^\alpha \times u^\beta \times D^\gamma \times T^\delta$, wobei h der Wärmeübertragungskoeffizient ist, C eine Konstante ist, D eine charakteristische Länge der Strömung des Zylinders ist, P der Druck in dem Zylinder ist, u die Geschwindigkeit der Gase in der Nähe der Wände des Zylinders ist, T die Temperatur der Gase in dem Zylinder ist, a, $\beta$, $\gamma$ und $\delta$ vorgegebene konstante Koeffizienten sind.

5. Verfahren nach Anspruch 4, wobei die Temperatur T durch ein Anwenden des Gesetzes idealer Gase in dem Zylinder (12) bestimmt wird.

6. Verfahren nach einem der Ansprüche 3 bis 5, wobei die Klopfanzeige mit Hilfe eines Schritts des Bestimmens der Wärmeübertragung Q bestimmt wird, sodass $Q = h \times (T1 - T2)$, wobei h der Wärmeübertragungskoeffizient ist und T1 - T2 der Temperaturgradient zwischen den Gasen in dem Zylinder (12) und der Wand des Zylinders (12) ist.

7. Verfahren nach einem der Ansprüche 2 bis 6, wobei das akustische Modell der Erhaltung der Bewegung von Gasen in dem Zylinder folgendermaßen ausgedrückt wird:

$$\rho_0 \frac{\delta_{u1}}{\delta t} + \nabla P_1 = 0$$

, wobei po die Dichte der Gase ist, u1 die mit der akustischen Welle assoziierte Geschwindigkeit der Gase ist und P1 der mit der akustischen Welle assoziierte Druck in dem Zylinder ist.

8. Verfahren nach einem der Ansprüche 2 bis 7, wobei die Geschwindigkeit der Gase in dem Zylinder (12) unter Berücksichtigung der Nenngeschwindigkeit der Gase in dem Zylinder (12) bestimmt wird.

9. Verfahren nach Anspruch 8, wobei die Nenngeschwindigkeit der Gase in dem Zylinder (12) mit Hilfe von Eigenschaften in Bezug auf den Einlass der Gase in den Zylinder (12), insbesondere der Eigenschaften in Bezug auf den Einlass, die Wirbel des Gases in dem Zylinder (12) erzeugen, ermittelt wird.

10. Verfahren nach einem der vorhergehenden Ansprüche, wobei das Verfahren einen zusätzlichen Schritt des Bestimmens einer abnormalen Verbrennung durch Analyse der Klopfanzeige umfasst.

11. Verfahren zur Steuerung der Verbrennung eines Verbrennungsmotors (10), insbesondere mit Fremdzündung, wobei ein Klopfen der Verbrennung in mindestens einem Zylinder (12) des Verbrennungsmotors (10) erkannt wird, **dadurch gekennzeichnet, dass** die folgenden Schritte umgesetzt werden:

a) Bestimmen einer Klopfanzeige mit Hilfe des Verfahrens nach einem der vorhergehenden Ansprüche; und
b) Steuern der Verbrennung des Verbrennungsmotors (10) in Abhängigkeit von der Klopfanzeige.

**Claims**

1. Method for determining an indicator of a combustion knock in at least one cylinder (12) of an internal combustion engine (10), notably a controlled-ignition engine, said cylinder (12) being provided with a pressure sensor (46a), **characterized in that** the following steps are implemented:

a) a local pressure in said cylinder (12) at a measurement point of said cylinder is measured by means of said pressure sensor (46a);
b) a modal breakdown of said local-pressure measurement signal is performed in order to determine the modes of oscillation of said local pressure;
c) an overall pressure in said cylinder (12) is determined by means of said modal breakdown of said local-pressure measurement signal, by performing the following steps:

i) a model of said overall pressure that is a function of the amplitude of the modes of said overall pressure is defined;
ii) the model of the overall pressure at the coordinates (x0, y0, z0) of said measurement point of said pressure sensor (46a) is calculated;
iii) said amplitude of said modes of said overall pressure is determined by identifying oscillations of each mode of said modal breakdown of said local pressure at said local-pressure measurement point; and

d) a knock indicator is determined, said knock indicator being a direct or indirect function of said overall pressure in the cylinder (12).

2. Method according to one of the preceding claims, wherein the method comprises an additional step of determining the velocity of the gases in said cylinder (12), at least in the vicinity of the walls of said cylinder (12), by applying an acoustic model of the conservation of momentum of the gases in said cylinder (12) at said overall pressure in said cylinder (12), and wherein said knock indicator is determined as a function of said velocity of the gases in said cylinder (12).

3. Method according to Claim 1, wherein the method further comprises the following steps:

i) a velocity of the gases in said cylinder (12), at least in the vicinity of the walls of said cylinder (12), is determined by applying an acoustic model of the conservation of momentum of gas in said cylinder (12) at said overall pressure in said cylinder (12);
ii) a coefficient of heat transfer to said walls of said cylinder (12) is determined by applying a heat transfer coefficient model using said measured local pressure and said velocity of the gases in said cylinder (12); and

iii) a knock indicator is determined by means of said coefficient of convective heat transfer to the walls of said cylinder (12).

4. Method according to Claim 3, wherein said heat transfer coefficient model can be written: $h = C \times P^{\alpha} \times u^{\beta} \times D^{\gamma} \times T^{\delta}$ where h is the heat transfer coefficient, C is a constant, D is a characteristic length of the flow in said cylinder, P is the pressure in said cylinder, u is said velocity of the gases in the vicinity of the walls of the cylinder, T is the temperature of the gases in the cylinder, and $\alpha, \beta, \gamma$. and $\delta$ are predetermined constant coefficients.

5. Method according to Claim 4, wherein said temperature T is determined by applying the perfect gas law in said cylinder (12).

6. Method according to one of Claims 3 to 5, wherein said knock indicator is determined by means of a step of determining the heat transfer Q such that Q = h $\times$ (T1 - T2) where h is the heat transfer coefficient and T1 - T2 is the temperature gradient between the gases in the cylinder (12) and the wall of the cylinder (12).

7. Method according to one of Claims 2 to 6, wherein said acoustic model of the conservation of momentum of the gases in said cylinder can be written:

$$\rho_0 \frac{\delta u_1}{\delta t} + \nabla P_1 = 0$$

where $\rho_0$ is the density of gases, u1 is the velocity of the gases that is associated with the acoustic wave and P1 is the pressure, in said cylinder, associated with the acoustic wave.

8. Method according to one of Claims 2 to 7, wherein said velocity of the gases in said cylinder (12) is determined by taking account of the nominal velocity of the gases in said cylinder (12).

9. Method according to Claim 8, wherein said nominal velocity of the gases in said cylinder (12) is estimated by means of characteristics of the admission of the gases into said cylinder (12), notably the characteristics of the intake that generate vorticity in said gas in said cylinder (12).

10. Method according to one of the preceding claims, wherein said method comprises an additional step of determining abnormal combustion by analysing said knock indicator.

11. Method for controlling the combustion in an internal combustion engine (10), notably a controlled-ignition engine, wherein combustion knock is detected in at least one cylinder (12) of said internal combustion engine (10), **characterized in that** the following steps are implemented:

a) a knock indicator is determined by means of the method according to one of the preceding claims; and

b) the combustion in said internal combustion engine (10) is controlled as a function of said knock indicator.

**Figure 1**

**Figure 2**

```
┌─────────┐
│   MES   │
└─────────┘
     │
     ▼
┌─────────┐
│   DEC   │
└─────────┘
     │
     ▼
┌─────────┐
│   PGL   │
└─────────┘
     │
     ▼
┌─────────┐
│   Vg    │
└─────────┘
     │
     ▼
┌─────────┐
│   IND   │
└─────────┘
     │
     ▼
┌─────────┐
│   CON   │
└─────────┘
```

**Figure 3**

```
┌─────────┐
│   MES   │
└─────────┘
     │
     ▼
┌─────────┐
│   DEC   │
└─────────┘
     │
     ▼
┌─────────┐
│   PGL   │
└─────────┘
     │
     ▼
┌─────────┐
│   Vg    │
└─────────┘
     │
     ▼
┌─────────┐
│   TTH   │
└─────────┘
     │
     ▼
┌─────────┐
│   IND   │
└─────────┘
     │
     ▼
┌─────────┐
│   CON   │
└─────────┘
```

**Figure 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2017218936 B
- JP 2017207015 B
- JP 2017214917 B
- WO 17126304 A
- US 2017226956 A
- US 20060243030 A

**Littérature non-brevet citée dans la description**

- **DUES, S. ; ADAMS, J. ; SHINKLE, G. ; DIV, D.** Combustion Knock Sensing : Sensor Selection and Application Issues SAE Trans. *J. Engines,* 1990
- **GAO, X. ; STONE, R. ; HUDSON, C. ; BRADBURY, I.** *The Détection and Quantification of Knock in Spark Ignition Engines SAE Technical Paper,* 1993
- **NABER, J. ; BLOUGH, J. ; FRANKOWSKI, D. et al.** Analysis of Combustion Knock Metrics in Spark-Ignition Engines SAE Trans. *J. Engines,* 2006
- **SHAHLARI, A. ; GHANDHI, J.** *A Comparison of Engine Knock Metrics SAE Technical Paper,* 2012